# EUROPEAN PATENT APPLICATION

(11) **EP 1 508 418 A1**
(43) Date of publication of application: **23.02.2005**
(21) Application number: 02726444.9
(22) Date of filing: 20.05.2002
(51) Int. Cl.: B29B 17/00, B29B 9/02, B29B 13/10, B02C 18/44, B29C 70/06, C09K 3/14, F16D 69/02, C10M 145/00, C10M 147/00, C10M 149/00, C10M 155/02

(54) **SHREDS FOR REINFORCEMENT, FIBER-REINFORCED PRODUCT USING THE SHREDS, AND METHOD OF MANUFACTURING THE SHREDS AND THE PRODUCT**

(71) Applicant: DU PONT-TORAY COMPANY, LTD., Chuo-ku, Tokyo 103-0023 (JP)
(72) Inventor: SUMIDA, Atsushi, DU PONT-TORAY CO., LTD., Chuo-ku, Tokyo 103-0023 (JP); TSUKAMOTO, Koichi, DU PONT-TORAY CO., LTD., Chuo-ku, Tokyo 103-0023 (JP)
(74) Representative: Cloughley, Peter Andrew
(86) International application number: PCT/JP2002/004851
(87) International publication number: WO 2003/097316

(57) **Abstract**

Shreds for reinforcement allowing the effective recycling of waste fiber converted products as resources, a fiber-reinforced product using the shreds, and a method of manufacturing the shreds and the product, the method comprising the steps of performing the cleaning treatment on the fiber converted products, impregnating resin into the fiber converted products, drying the resin-, shredding the fiber converted products by using a shearing type shredding machine, dispersing the shreds in a matrix, and manufacturing a formed product from the composite material of the shreds and the matrix.

## Description

### BACKGROUND OF THE INVENTION

### Technical Field

The present invention relates to technology for reusing discarded fiber converted products as resources, and more specifically, to shreds for reinforcement, to fiber-reinforced products in which the shreds are used, and to the corresponding manufacturing methods.

### Description of the Related Art

It is normal practice for fiber converted products and other similar industrial products to be buried in landfills or processed through incineration after use; however, in recent years, increased awareness of environmental issues has led to the promotion of efforts to reuse these discarded products as resources in order to limit the consumption of such materials and to reduce the burden placed on our natural environment.

Meanwhile, high-functional fibers such as glass fiber, carbon fiber, and aramid fiber are used not only in the fiber converted products, but also to a large extent as reinforcing material in fiber-reinforced resin. This type of fiber-reinforced resin is put to use in a wide range of fields such as aviation, aerospace, construction, civil engineering, shipping, automobiles, wheeled vehicles, tank containers, and industrial products; furthermore, it is widely known that the use thereof will expand to include a much greater number of fields in the future.

Accordingly, if waste fiber converted products could be subjecting to recycle processing for reuse as reinforcing material in fiber-reinforced resin, the volume of discarding thereof could be lowered, reducing the burden placed on our natural environment and contributing significantly to the realization of a more environmentally-friendly society.

With regard to this point, Japanese Patent Laid-Open Publication No. 1995-132562 discloses FRP-chip-reinforced plastic realized through the addition of chips produced from waste fiber-reinforced plastics into plastic. However, this technology represents the reuse of waste fiber-reinforced plastic and does not apply to the reuse of fiber converted products that do not include resin.

As a result of the fact that shreds of fiber converted products are not subjected to resin processing and the convergence between fibers is insufficient, it is normal for them to take the bulky cotton-like form. In particular, fiber converted products comprising high-functionality fibers are characterized by high resistance during shredding and the resulting difficulty of this processing; consequently, this leads not only to the requirement for higher levels of output from processing machinery, but also to high levels of dispersion in qualities such as the size of shreds, dispersion of fiber lengths, and other similar factors. For this reason, reinforcing material obtained by the shredding of fiber converted products with no other prior processing is characterized by the formation of aggregate within the matrix and the resulting difficulty in achieving a uniform mixture, and consequently by the inability to fully realize the benefits offered by fiber-reinforced resins. In addition, fiber converted products suitable for recycling are the used and contaminated waste to which dirt and foreign matters have adhered, and if shredded as it is, problems develop in the processing machinery, adversely affecting the performance of the resulting fiber-reinforced resin.

### SUMMARY OF THE INVENTION

The purpose of the present invention is to provide shreds for reinforcement enabling the efficient reuse of waste fiber converted products as raw materials, fiber-reinforced products using these shreds, and the corresponding manufacturing methods.

As a result of concentrated studies aimed at the reuse of recyclable fiber converted products as resources, it was found that the shredding of fiber converted products in a condition of adherence of resin thereto made it possible for this processing to be performed efficiently, while increasing the level of convergence between fibers and preventing the shreds from becoming cotton-like form, and also the mixing into the matrix can be achieved more easily.

In other words, the shreds for reinforcement according to the present invention to achieve the above mentioned aims are characterized in that they are realized through the shredding of fiber converted products in a condition of adherence of resin thereto.

Such type of shreds does not easily take the bulky cotton-like form, furthermore, disparity in the qualities thereof is reduced. Accordingly, these shreds are ideal for use as the reinforcing material in fiber-reinforced resin. That is to say, uniform dispersion of these shreds in a matrix containing thermoplastic or thermosetting resin can be easily achieved and the performance of fiber-reinforced resins can be enhanced. In addition, these shreds can also be used for rubber reinforcement.

Meanwhile, the manufacturing method selected for the shreds for reinforcement according to the present invention to achieve the above mentioned aims is characterized, after a cleaning treatment is performed on fiber converted products, resin dispersed or dissolved in a solvent is impregnated into said fiber converted products and dried, and said fiber converted products are subsequently shredded with use of a shearing type shredding machine.

By impregnating resin into the cleaned fiber converted products and drying it, and by shredding such fiber converted products with use of the shearing type shredding machine, it is possible to efficiently produce the ideal shreds for use as the reinforcing material in the fiber-reinforced resin. In particular, the used fiber converted products are contaminated with adhering dirt and foreign matters, and if shredded as is, problems develop in the processing machinery and the performance of the resulting fiber-reinforced resin is adversely affected. However, these disadvantages can be removed by cleaning the fiber converted products.

In the shredding process with use of the shearing type shredding machine, it is preferable that a plurality of multi-stage steps progressively reduce the lengths of the shreds, ultimately producing shreds, having lengths of 5 mm or less, with 50% wt. or more of the entire shreds. For example, it is preferable that the shredding step with use of the shearing type shredding machine comprises at least two steps: a rough shredding step producing shreds, having lengths of between 5 and 20 mm, with 50% wt. or more of the entire shreds, and a fine shredding step producing shreds of having lengths of between 5 mm or less, with 50% wt. or more of the entire shreds.

According to the present invention, the shreds obtained as described above can be dispersed in a matrix containing thermoplastic or thermosetting resin to provide fiber-reinforced resin products.

It is more preferable that the shreds obtained as described above are dispersed in a matrix containing thermoplastic or thermosetting resin to provide heat-resistant friction-wear components.

Furthermore, the present invention provides a manufacturing method for the fiber-reinforced resin products, wherein, the shreds obtained as described above are dispersed into the matrix containing thermoplastic or thermosetting resin, and a formed product is manufactured from the composite material of the shreds and the matrix. It is more preferable that the present invention provides a manufacturing method for the heat-resistant friction-wear components, wherein the shreds obtained as described above are dispersed into the matrix containing thermoplastic or thermosetting resin, and a formed product is manufactured from the composite material of the shreds and the matrix.

Recycled fiber-reinforced resins with reinforcing material comprising shreds obtained through the recycling of recyclable fiber converted products as described above can be used as industrial materials for transportation machinery components, industrial machinery components, electrical machinery components, and the like. In particular, these resins are applicable for bearings, bushes, brake pads, clutch pads, and other friction-wear components of automobiles and other machinery wherein heat resistance and excellent sliding characteristics are in high demand.

According to the present invention, the shreds obtained as described above can be dispersed in a matrix comprising rubber compositions to provide fiber-reinforced rubber products.

Furthermore, the present invention provides a manufacturing method for the fiber-reinforced rubber products, wherein the shreds obtained as described above are dispersed into the matrix comprising rubber compositions, and a formed product is manufactured from the composite material of the shreds and the matrix.

### BRIEF DESCRIPTION OF THE DRAWINGS

FIG. 1 is a cross-section view showing an example of a shearing type shredding machine (shredder type) used in accordance with the present invention.
FIG. 2 is a cross-section view showing an example of a shearing type shredding machine (rotary type) used in accordance with the present invention.
FIG. 3 is a cross-section view showing another example of a shearing type shredding machine (rotary type) used in accordance with the present invention.
FIG. 4 is a cross-section view showing an enlarged portion of a fiber-reinforced resin product obtained in accordance with the present invention.

### DETAILED DESCRIPTION OF THE PREFERRED EMBODIMENT

Hereinafter, the present invention will be described in detail.

With regard to the present invention, "fiber converted products" refers not only to primary processed products such as multiple wound yarn, twisted thread, knit, and cloth, but also to working gloves, protective clothing, industrial materials, and other secondary processed products wherein primary processed products are used. While "recyclable fiber converted products" represents basic used fiber converted products, this also includes defective items, discarded items, waste, and other products of the manufacturing process for fiber converted products.

As a fiber to be recycled, wholly aromatic polyamide fiber, carbon fiber, glass fiber, poly p-phenylene benzobisoxazole (PBO) fiber, aromatic polyester fiber, polyvinyl alcohol fiber, and the like represent fiber can be recited. Poly-paraphenylene terephthalamide (PPTA) and other para-type wholly aromatic polyamide fibers are preferable as wholly aromatic polyamide fiber.

Furthermore, with regard to used fiber converted products, it is preferable that cleanup processing be performed in advance. In addition to eliminating contaminants adhering to the fiber converted products, this cleanup processing also removes oil content, and entrapped material such as resin and metallic powder, ensuring that shredding will proceed efficiently without the occurrence of mechanical problems. In this regard, the cleanup processing is of extreme importance with respect to improving the quality of the shreds and fiber reinforced products wherein they are used.

The resin attached to the fiber converted products can be either thermoplastic or thermosetting resin. It is preferable that these resins be attached to the fiber converted products in a condition of dispersal or dissolution within water, organic solvent, or another solvents.

Nylon, polyester, polyacetal, polycarbonate, polyurethane, urea resin, epoxy resin, silicone resin, phenol resin, fluororesin, polyimide resin, and other resins can be dispersed or dissolved in solvents. In terms of these resins, it is critical that a resin of the same type as the matrix or a resin with favorable solubility to the matrix be selected. If a resin with poor solubility with respect to the matrix were to be selected, fiber dispersibility in the obtained fiber reinforced resin and fiber-to-resin adhesiveness would deteriorate, and consequently, it would not be possible to achieve products with consistent, beneficial properties.

When using a thermoplastic as the matrix, it is preferable that nylon, polyester, polyacetal, polycarbonate, polyurethane, urea resin, epoxy resin, silicone resin, or the like be used as the resin for adhesion to the fiber converted product. For example, when using nylon as the matrix, it is favorable to select water-soluble or methanol-soluble nylon or polyurethane, urea resin, or another resin exhibiting dispersability or dissolvability in water as the resin for adhesion to the fiber converted product. In terms of organic solvents, alcohol-based, keytone-based, or ethyl-acetate-based solvents can be used.

When using a thermosetting resin as the matrix, it is preferable that epoxy resin, phenol resin, polyurethane, fluororesin, polyimide resin, silicone resin, or the like be used as the resin for adhesion to the fiber converted product. It is preferable that these thermosetting resins be in a condition of dispersion in water or in a condition of dissolution in an organic solvent for impregnation into the fiber converted product and drying. For reasons relating to manufacture and handling, it is preferable that thermosetting resins be dispersible in water.

In the fiber converted product in a dried condition, it is preferable that the adhesion volume of resin be between 2% and 30% wt. of the overall weight, and it is more preferable that the adhesion volume of resin be between 5% and 20% wt. of the overall weight. If the resin adhesion volume is less than 2% wt., convergence between fibers will be insufficient during shredding and shreds will take the form of bulky cotton-like form; accordingly, it is difficult to achieve uniform dispersion of these shreds in the matrix. Conversely, if the resin adhesion volume exceeds 30% wt., the fibers will form a strong, solid body; accordingly, this situation is also characterized by poor dispersion within the matrix of the shreds comprising convergent fiber.

In the shredding of fiber converted products, it is preferable to use a shearing type shredding device. The most common forms of this type of shearing type shredding device are guillotine types, shredder types, and rotary types having both rotating blades and fixed blades; furthermore, it is acceptable for combinations of these devices to be used.

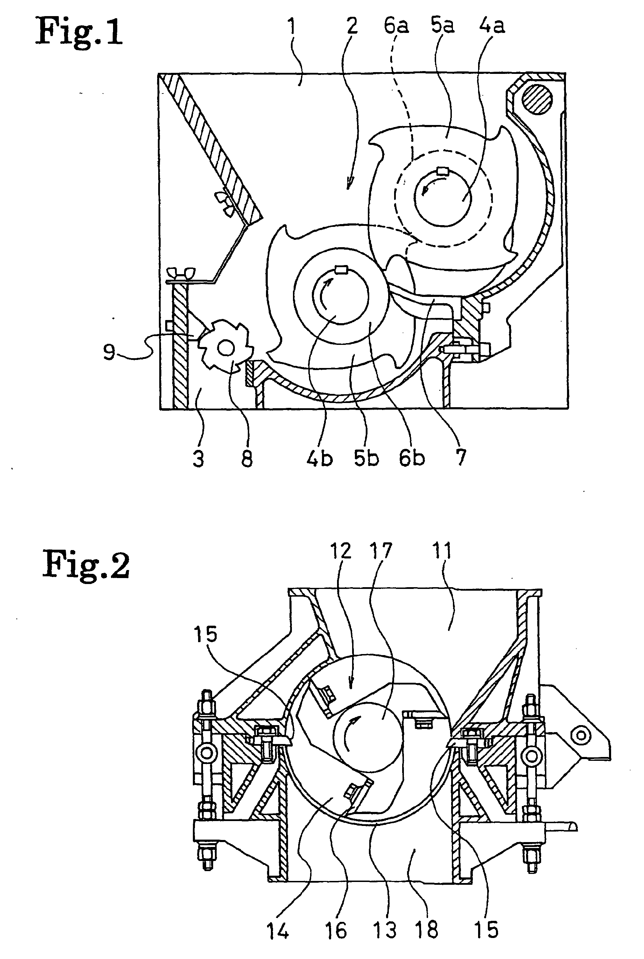

FIG. 1 shows an example of a shearing type shredding machine (shredder type). In this shearing type shredding machine, fiber converted products inserted via an input opening 1 are shredded in a shredding part 2 and discharged from an exit opening 3. The shredding part 2 comprises a plurality of mutually meshing rotating blades 5a, 5b and spacers 6a, 6b mounted alternately on a pair of rotating shafts 4a, 4b. The rotating shafts 4a, 4b rotate in mutually opposite directions in order that fiber converted products may be drawn in. Further, a scraper 7 is disposed in such a way that it makes contact with the spacer 6b between the adjacent rotating blades 5a, 5b. In addition, a fine shredding means comprising a rotating blade 8 and a fixed blade 9 is added in front of the exit opening 3.

In the shearing type shredding machine explained above, fiber converted products input via the input opening 1 are ripped apart as a result of the shearing action of the rotating blades 5a, 5b in the shredding part 2 and are further shredded as a result of the shearing action of the rotating blade 8 and the fixed blade 9, becoming shreds.

FIG. 2 shows an example of a shearing type shredding machine (rotary type). In this shearing type shredding machine, fiber converted products inserted via an input opening 11 are shredded upon passage through a shredding part 12. The shredding part 12 has a cylindrical holding space 14 enclosed in a mesh-type screen 13, and in addition to providing a pair of fixed blades 15 penetrating into the holding space 14, it also comprises a rotating shaft 17, disposed within the holding space 14 and whereon a plurality of rotating blades 16 are mounted radially. Upon rotation of the rotating shaft 17, a shearing action takes place between the fixed blades 15 and the rotating blades 16. Shreds having passed through the screen 13 can be discharged via an exit opening 18.

In the shearing type shredding machine explained above, fiber converted products input via the input opening 11 are ripped apart as a result of the shearing action of the fixed blades 15 and the rotating blades 16 in the shredding part 12, becoming shreds. At this time, the length of the shreds is determined based on the size of the holes in the mesh of the screen 13.

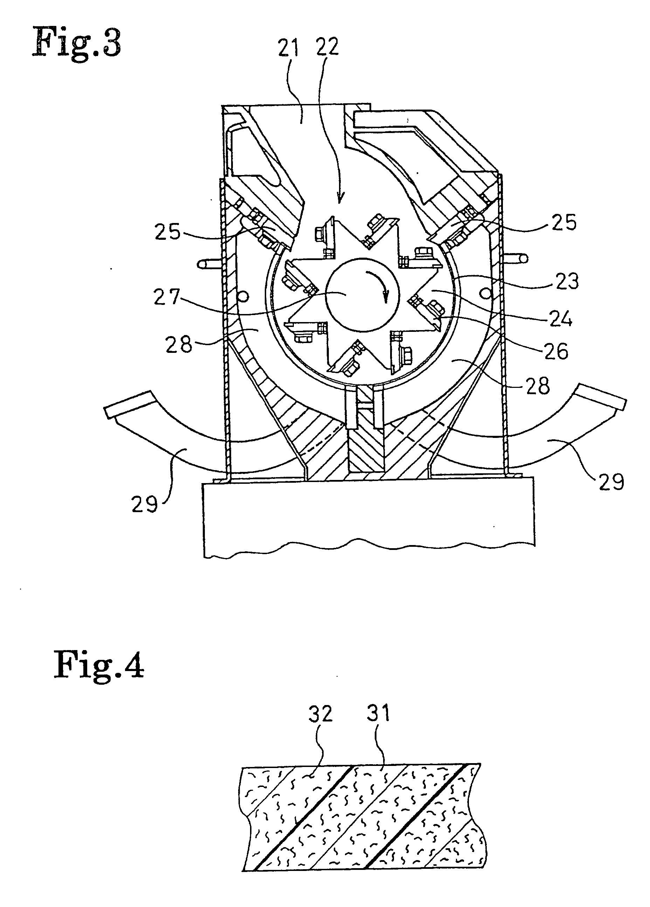

FIG. 3 shows another example of a shearing type shredding machine (rotary type). In this shearing type shredding machine, fiber converted products inserted via an input opening 21 are shredded upon passage through a shredding part 22. The shredding part 22 is structured as having a cylindrical holding space 24 enclosed in a mesh-type screen 23, providing a pair of fixed blades 25 penetrating into the holding space 24, and also disposing a rotating shaft 27 within the holding space 24 whereon a plurality of rotating blades 26 is mounted radially. Upon rotation of the rotating shaft 27, a shearing action takes place between the fixed blades 25 and the rotating blades 26. A collecting portion 28 is disposed on the outer side of the screen 23, and the shreds having passed through the screen 23 are collected therein. Discharge pipes 29 are connected to the lower part of the collecting portion 28, and the shreds are drawn to the exterior thereby.

In the shearing type shredding machine explained above, fiber converted products input via the input opening 21 are ripped apart as a result of the shearing action of the fixed blades 25 and the rotating blades 26 in the shredding part 22, becoming shreds. At this time, the length distribution of the shreds is determined based on the size of the holes in the mesh of the screen 23.

With regard to the present invention, it is preferable in accordance with the relationship between dispersability in the matrix and the length of the fibers required for reinforcement that the size of shreds used as reinforcing material be 10 mm or less. In order to efficiently obtain this type of shreds, shredding process using a shearing type shredding machine can be performed at least through two steps, one of which being a rough shredding step whereby shreds of between 5 and 20 mm in length are made to account for 50% wt. minimum of all shreds, the other of which being a fine shredding step whereby shreds of 5 mm or less in length are made to account for 50% wt. minimum of all shreds.

When the rough shredding step and fine shredding step are performed using a rotary type shredding machine, the rotation speed of the blades and the mesh hole diameter of the screen provided in front of the passage where the shreds are discharged can be controlled for each of the steps. In such a case, it is acceptable to use a combination of a plurality of rotary type shredding machines having a mutually different shearing capabilities, or alternatively, to repeat the shredding step two or three times using the same shearing device. Here, it is preferable for the number of rotating blades in the fine shredding step to exceed the number of rotating blades in the rough shredding step. It is also preferable for the rotating speed in the fine shredding step to exceed the rotating speed in the rough shredding step. Further, it is acceptable to perform rough shredding by a shredder type shredding machine and fine shredding by a rotary type shredding machine.

Resin-processed shreds obtained as explained above do not readily take on the form of bulky cotton-like form, and disparity in the quality thereof is reduced, ensuring suitability as the reinforcing material in fiber-reinforced resin. In addition, the above-explained shreds exhibit favorable passage through the screen etc.

Either thermoplastic or thermosetting resin can be used as the matrix for forming the fiber-reinforced resin products.

Nylon, polyester, polycarbonate, polyacetal, polyphenylene sulfide (PPS), polyether ether ketone (PEEK), polyether ketone ketone (PEKK), polyamide-imide resin, or the like can be used as the thermoplastic used in the matrix. Thermoplastic polyether-ester elastomer and other thermoplastic elastomers can also be used as one form of thermoplastic resin.

Epoxy resin, phenolic resin , polyimide resin, furan resin, keton resin, sulfonamide resin, unsaturated polyester resin, urea resin, vinylester resin, polyurethane, silicone resin, alkyd resin, or the like can be used as the thermosetting resin used in the matrix, and it is favorable to use the same resin or a resin with good solubility as the resin for adhesion to the fiber converted products.

In particular, a thermoplastic selected from nylon, polyester, polycarbonate, polyacetal, PPS, PEEK, PEKK, and polyamide-imide resin; a thermosetting resin selected from epoxy resin, phenolic resin, polyimide resin, and alkyd resin; or a thermoplastic elastomer is preferable for the matrix of friction-wear components.

Whereas the matrix of fiber-reinforced resin products must contain resin, extender (or filler) such as glass powder, calcium carbonate, barium sulfate, or cashew dust or additives generally used for fiber-reinforced resin products such as graphite and other lubricating agents can be added as the other components thereof. However, it is preferable that the inclusion volume of resin in the fiber-reinforced resin products be between 5% and 95% wt. Further, although the inclusion volume of fiber in the fiber-reinforced resin products is dependent on the intended use thereof, this is normally set to between 5% and 50% wt., and is preferable at between 10% and 45% wt.

The shreds provided by the present invention are suitable for use not only as the reinforcing material of fiber-reinforced resin products, but also as the reinforcing material of fiber-reinforced rubber products. In such a case, it is acceptable for the shreds to be dispersed in a matrix comprising rubber compositions.

These rubber compositions are not limited to rubber components, but can, for example, also be natural rubber, isoprene rubber, butadiene rubber, styrene-butadiene rubber, chloroprene rubber, nitrile rubber, ethylenepropylene rubber, acrylic rubber, silicone rubber, fluorine rubber, or urethane rubber. Naturally, these rubber compositions can contain any type of additives in general use.

When the shreds provided by the present invention are dispersed in a matrix and fiber-reinforced products are produced, no specific restrictions apply to the forming method for the mixture of shreds and matrix material. For example, whereas compounding and stirring using a mixer are possible, compounding by a screw-type extruder in particular further improves the degree of dispersion within the matrix. Further, if screw-type injection molding is carried out, more efficient and economical production will also be achieved together with improved dispersal, and this is preferable in terms of the promotion of recycling. Furthermore, a means whereby forming is carried out within the die through constant-pressurized flow after the improvement of dispersal by mixing of shreds and matrix together is effective for certain products. In the case of matrices comprising thermoplastic, compounding can be carried out using an extruder in order to produce pellets, and forming can be carried out using an injection molding apparatus.

FIG 4. shows an enlarged portion of a fiber-reinforced product obtained in accordance with the present invention. As shown in FIG. 4, the fiber-reinforced product according to the present invention comprises shreds 32 dispersed within a matrix 31, with the shreds 32 obtained by the shredding of fiber converted products in a condition where resin is adhering thereto.

### Embodiments

Hereinafter, the present invention will be described with reference to the preferred embodiments thereof. First of all, the present invention will be described with respect to the use of a thermosetting resin as the matrix. Methods for the measurement of physical properties were as follows.

### A. Mechanical properties:

Test pieces of 15 mm in width, 95 mm in length, and 2.5 mm in thickness were fabricated from sample forms obtained through forming, bend testing was carried out in accordance with JIS K 7171, and the bending strength (MPa) and bending modulus (MPa) were determined.

### B. Friction characteristics:

Referring to JIS D 4411 and based on Method A from JIS K 7218, wear testing was carried out and the coefficient of dynamic friction and wear amount (mg) were determined. FC25 steel was used as the counter material. Furthermore, a load of 0.98 MPa and a speed of 4 m/s were adopted as conditions for wearing.

### Embodiment 1

Used working gloves manufactured from aramid fiber were washed for 15 minutes using a neutral detergent, and following this, they were subjected to centrifugal dewatering and dried. These cleaned gloves were soaked in water-dispersible, resole-type phenolic resin emulsion (PE-201L from Dainippon Ink & Chemicals) at a concentration of 20%, the resin adhesion volume was regulated by centrifugal dewatering for 3 minutes, and drying was carried out for 20 minutes at 180°C. As a result, gloves with a resin adhesion volume of approximately 10% wt. were obtained.

Following this, the gloves were subjected to two cycles of shredding process using the shredder type shredding machine shown in FIG. 1. The first shredding cycle produced bundle-type shreds with lengths of between 3 and 10 mm and fiber-type shreds with lengths of between 1 and 5 mm. A small amount of these shreds were entwined in bundles. By the second shredding process, the length of the bundles became shorter, the proportion of the bundles became less than half, and the proportion of fiber-type shreds were increased. The speed of processing with the shredder type shredding machine was approximately 100 grams per minute for the first cycle, with the second cycle being faster at approximately 200 grams per minute. This is due to the fact that, after shearing shreds are reduced to a certain size, they proceed to the fine shearing process by the fine shearing blade without repeating to pass through the shredder; accordingly, the processing speed is dependent on the output capacity of the fine shearing blade.

Test pieces obtained in this way were mixed at 20% wt. with novolac-type phenolic resin (J-375 from Dainippon Ink & Chemicals) in powder form and compounding thereof was performed for 1 minute using a universal mixer, producing a resin and fiber compound material. Following this, glass powder was added and mixed as a filler, the mixture was charged to a die, preforming was carried out at a temperature of 150°C, and curing was carried out at a temperature of 180°C to obtain a fiber-reinforced formed resin product with a 6% wt. inclusion volume of shreds and a 24% wt. inclusion volume of resin. The physical properties of this formed product are shown in Table 1.

### Embodiment 2

Used working gloves manufactured from aramid fiber were washed for 15 minutes using a neutral detergent, and following this, they were subjected to centrifugal dewatering and dried. These cleaned gloves were soaked in water-dispersible, resole-type phenolic resin emulsion (PE-201L from Dainippon Ink & Chemicals) at a concentration of 20%, the resin adhesion volume was regulated by centrifugal dewatering for 3 minutes, and drying was carried out for 20 minutes at 180°C. As a result, gloves with a resin adhesion volume of approximately 10% wt. were obtained.

Following this, these gloves were subjected to shearing process using a rotary type shredding machine (rough shredder A) as shown in FIG. 2 and a rotary type shredding machine (fine shredder B) as shown in FIG. 3, the fine shredder B having a greater number of blades and a higher speed specification than the rough shredder A. Specifically, the gloves were inserted at predetermined volumes into the rough shredder A, to which a screen with holes having a diameter of 12mm had been assembled, were subjected to shredding, and were passed through the screen holes, drawn in, and discharged by a cyclone separator. This shredding produced bundle-type shreds with lengths of approximately 10 mm and fiber-type shreds with lengths of 5 mm or less. Of these shreds, 50% wt. or more were bundle type shreds. Next, the shreds were transfered into the fine shredder B, to which a screen with holes having a diameter of 2mm had been assembled, and were subjected to high-speed shredding at 2,000 rpm, producing short fiber-type shreds with lengths of between 1 and 3 mm. Of these shreds, almost none were bundle-type shreds. The processing speed of the rough shredder A was approximately 500 grams per minute, and the processing speed of the fine shredder B was approximately 300 grams per minute.

Test pieces obtained in this way were mixed at 20% wt. with novolac-type phenolic resin (J-375 from Dainippon Ink & Chemicals) in powder form and compounding thereof was performed for 10 seconds using a universal mixer, producing a resin and fiber compound material. Following this, glass powder was added and mixed as a filler, the mixture was charged to a die, preforming was carried out at a temperature of 150°C, and curing was carried out at a temperature of 180°C to obtain a fiber-reinforced resin product with an 8.5% wt. inclusion volume of shreds and a 21.5% wt. inclusion volume of resin. The physical properties of this formed product are shown in Table 1.

### Embodiment 3

Fiber-type shreds obtained using the same method as described for Embodiment 2 were mixed at 25% wt. with novolac-type phenolic resin (J-375 from Dainippon Ink & Chemicals) in powder form and compounding thereof was performed for 10 seconds using a universal mixer, producing a resin and fiber compound material. Following this, glass powder was added and mixed as a filler, the mixture was charged to a die, preforming was carried out at a temperature of 150°C, and curing was carried out at a temperature of 180°C to obtain a fiber-reinforced resin product with a 10% wt. inclusion volume of shreds and a 20% wt. inclusion volume of resin. The physical properties of this formed product are shown in Table 1.

**Table 1**

| | Embodiment 1 | Embodiment 2 | Embodiment 3 |
|---|---|---|---|
| Shreds (% wt.) | 6 | 8.5 | 10 |
| Resin (% wt.) | 24 | 21.5 | 20 |
| Bending strength (MPa) | 79.2 | 66.6 | 57.3 |
| Bending modulus (MPa) | 9985 | 7753 | 7330 |
| Coefficient of dynamic friction Sample temperature (°C) | 0.108 210 | 0.130 210 | 0.125 210 |
| Wear volume | | | |
| Local (mg) | 0.429 | 0.545 | 0.387 |
| Counter material (mg) | 44.6 | 75.9 | 25.9 |

As shown in Table 1, each of the fiber-reinforced resin products of Embodiment 1 through Embodiment 3 exhibits physical properties in terms of usage in heat-resistant friction-wear components.

Next, the present invention will be described with respect to the use of a thermoplastic as the matrix. Methods for the measurement of physical properties were as follows.

### C. Mechanical properties:

Testing was carried out in accordance with ASTM D-638 on dumbbell specimen produced by injection molding, and the strength (MPa) and modulus (MPa) were determined.

### D. Friction wear properties:

The coefficient of friction was measured using test pieces obtained through injection molding and using steel (S45C) as the counter material. Lower values of this friction coefficient correspond to better wear resistance.

### Embodiment 4

Used working gloves manufactured from aramid fiber were washed using a neutral detergent, and following this, they were subjected to centrifugal dewatering. These cleaned gloves were soaked in a polyurethane water emulsion at a concentration of 20%, they were subjected to centrifugal dewatering, and drying was carried out for 1 hour at 150°C. As a result, gloves with a resin adhesion volume of approximately 10% wt. were obtained.

These gloves were shredded using a shredder and shreds with a length of approximately 3 mm were obtained. These shreds were mixed at 25% wt. with nylon 66 pellets at 75% wt., the mixture was compounded and extruded using an extruder, and the extrusion was cut into lengths of between approximately 3 and 5 mm, producing pellets containing 22.5% wt. of aramid fiber. These pellets were again provided to the injection molding apparatus, and the molten form thereof was pressed into a die to obtain a formed product. The physical properties of this formed product are shown in Table 2.

### Embodiment 5

Used working gloves manufactured from aramid fiber were washed using a neutral detergent, and following this, they were subjected to centrifugal dewatering. These cleaned gloves were soaked in a water solvent containing dissolved nylon resin at a concentration of 20%, they were subjected to centrifugal dewatering, and drying was carried out for 1 hour at 120°C. As a result, gloves with a resin adhesion volume of approximately 10% wt. were obtained.

These gloves were shredded using a shredder and shreds with a length of approximately 3 mm were obtained. Using these shreds and nylon 66 pellets as the materials, a formed product was obtained through the same injection molding method as described for Embodiment 4. The physical properties of this formed product are shown in Table 2.

### Comparative Example

A formed product was obtained through injection molding by using nylon 66 pellets as the material. The physical properties of this formed product are shown in Table 2.

**Table 2**

| | Embodiment 4 | Embodiment 5 | Comparative example |
|---|---|---|---|
| Tensile strength (MPa) | 95 | 100 | 83 |
| Tensile modulus (MPa) | 5000 | 5050 | 3060 |
| Coefficient of friction | 0.41 | 0.40 | 0.44 |

As shown in Table 2, each of the fiber-reinforced formed resin products of Embodiment 4 through Embodiment 5 exhibits excellent physical properties when compared with a product containing no reinforcing fiber.

When, in accordance with the present invention as explained above, recyclable fiber converted products are cleaned, resin is impregnated therein and dried, and following this, the fiber converted products are shredded with use of a shearing type shredding machine, the obtained shreds can be mixed into a matrix and formed to obtain fiber-reinforced products, and in particular, fiber-reinforced resin products for use in heat-resistant, friction-wear components can be obtained. As a result, industrial waste produced by the discarding or incineration of fiber converted products can be significantly lowered and the burden placed on the environment can be reduced.

## Claims

1. (Cancelled)

2. (Cancelled)

3. (Cancelled)

4. (Amended) A manufacturing method for shreds for reinforcement, wherein, after a cleaning treatment is performed on used fiber converted products, resin dispersed or dissolved in a solvent is impregnated into said fiber converted products and dried, and said fiber converted products are subsequently shredded with use of a shearing type shredding machine.

5. The manufacturing method for shreds for reinforcement of claim 4, wherein the fiber of said fiber converted products is wholly aromatic polyamide fiber, poly p-phenylene benzobisoxazole fiber, aromatic polyester fiber, polyvinyl alcohol fiber, or a combination thereof.

6. The manufacturing method for shreds for reinforcement of claims 4 or 5, wherein said resin adhering to said fiber converted products is nylon, polyester, polycarbonate, polyacetal, polyurethane, urea resin, epoxy resin, silicone resin, phenolic resin, fluororesin, polyimide resin, or a combination thereof.

7. The manufacturing method for shreds for reinforcement of any one of claims 4 to 6, wherein the shredding process with use of said shearing type shredding machine comprises multi-stage steps by which the lengths of said shreds are progressively reduced.

8. The manufacturing method for shreds for reinforcement of any one of claims 4 to 6, wherein the shredding process with use of said shearing type shredding machine comprises multi-stage steps by which the lengths of said shreds are progressively reduced, ultimately producing shreds, having lengths of 5 mm or less, with 50% wt. or more of all shreds.

9. The manufacturing method for shreds for reinforcement of any one of claims 4 to 6, wherein the shredding process with use of said shearing type shredding machine comprises at least two steps, one of which being a rough shredding step producing shreds, having lengths of between 5 and 20 mm, with 50% wt. or more of all shreds, and another of which being a fine shredding step producing shreds, having lengths of between 5 mm or less, with 50% wt. or more of all shreds.

10. (Cancelled)

11. A manufacturing method for fiber-reinforced resin products, wherein the shreds obtained though the manufacturing method of any one of claims 4 to 9 are dispersed into a matrix containing resin, and a formed product is manufactured from the composite material of the shreds and the matrix.

12. (Cancelled)

13. A manufacturing method for heat-resistant friction-wear components, wherein the shreds obtained though the manufacturing method of any one of claims 4 to 9 are dispersed into a matrix containing resin, and a formed product is manufactured from the composite material of the shreds and the matrix.

14. (Cancelled)

15. A manufacturing method for fiber-reinforced rubber products, wherein the shreds obtained though the manufacturing method of any one of claims 4 to 9 are dispersed into a matrix comprising rubber compositions, and a formed product is manufactured from the composite material of the shreds and the matrix.

16. (Added) The manufacturing method for shreds for reinforcement of any one of claims 4 to 9, wherein the fiber converted products are working gloves.
